# DEMANDE DE BREVET EUROPEEN

(11) **EP 2 647 572 A1**
(43) Date de publication de la demande: **09.10.2013**
(21) Numéro de dépôt: 13161917.3
(22) Date de dépôt: 02.04.2013
(51) Int. Cl.: B64D 43/00, G06F 1/16

(54) **Système de visualisations modulaire pour hélicoptère**

(30) Priorité: 06.04.2012 FR 1201032
(71) Demandeur: Thales, 92200 Neuilly Sur Seine (FR)
(72) Inventeur: Berger, Jean-Paul, 33187 Le Haillan Cedex (FR); Laluque, Laurent, 33000 Bordeaux (FR); Bonnet, Denis, 33000 Bordeaux (FR)
(74) Mandataire: Bréda, Jean-Marc

(57) **Abrégé**

Le domaine général de l'invention est celui des systèmes de visualisation de cockpit d'hélicoptère. Le système selon l'invention comporte au moins un premier écran de visualisation mobile (E1, E2, E3). En fonction de la mission et de façon à optimiser la vision du paysage extérieur, on déplace le ou les écrans mobiles afin qu'ils se trouvent soit dans le champ de vision du pilote, soit hors de son champ visuel. Les symbologies affichées sont adaptées en fonction de la mission et de la position de l'écran.

## Description

Le domaine de l'invention est celui des systèmes de visualisation montés dans des cockpits d'hélicoptère.

Les systèmes de visualisation de cockpit pour hélicoptère sont constitués d'écrans de visualisation disposés devant l'équipage. On compte ainsi de deux à six écrans par cockpit selon la taille de l'hélicoptère et son utilisation. L'ensemble des écrans occupe la totalité de la largeur disponible de la planche de bord. Ces configurations dites « Glass Cockpit » sont proches de celles utilisées dans les cockpits d'avions civils. Elles permettent de voler aux instruments avec une grande surface d'affichage, le vol aux instruments étant connu sous l'acronyme de « IFR » ou « Instrument Flight Rules ».

Toutefois, dans un hélicoptère, par bonnes conditions météorologiques, le pilote préfère le vol à vue connu sous l'acronyme de « VFR » ou « Visual Flight Rules ». Le pilote souhaite alors disposer de la vision du paysage extérieur la plus large possible. Il est bien clair que les installations actuelles masquent toute la partie basse du paysage extérieur sans qu'il soit possible d'y remédier très facilement.

Pour améliorer la vision de l'extérieur, il est possible de ménager des espaces de vision sur les côtés latéraux de la planche de bord. Cependant, cette solution n'est pas idéale dans la mesure où, pour avoir un accès visuel à ces espaces, le pilote doit changer sa position normale de pilotage.

Une autre solution consiste à installer des caméras sur le porteur et à afficher les images captées sur les écrans de visualisation, reconstituant ainsi une image synthétique du paysage extérieur. Cependant, l'inconvénient majeur de cette solution est la parallaxe existant entre l'image affichée et l'image réelle qui peut être énorme et tromper le pilote dans l'appréciation de la distance et de la position des objets extérieurs.

Le système selon l'invention ne présente pas ces inconvénients. Le système comporte des écrans de visualisation mobiles et rétractables que le pilote peut enlever de son champ de vision pour avoir une vision de l'extérieur. Il peut ainsi adapter la surface d'affichage en fonction du contexte opérationnel.

Plus précisément, l'invention a pour objet un système de visualisation de cockpit d'hélicoptère comportant au moins un premier écran plat de visualisation situé dans un premier plan prédéterminé, **caractérisé en ce que** le système de visualisation comporte des moyens mécaniques agencés de façon que ledit premier écran plat de visualisation soit mobile en translation dans une direction prédéterminée dans ledit premier plan prédéterminé sur une première longueur prédéterminée.

Avantageusement, le système de visualisation comporte un second écran plat de visualisation situé dans un second plan prédéterminé parallèle au premier plan prédéterminé et en ce que les moyens mécaniques sont agencés de façon que ledit second écran plat de visualisation soit mobile en translation dans la même direction prédéterminée dans ledit second plan prédéterminé sur une seconde longueur prédéterminée.

Avantageusement, le système de visualisation comporte un troisième écran plat de visualisation situé dans un troisième plan prédéterminé parallèle au premier plan prédéterminé et en ce que les moyens mécaniques sont agencés de façon que ledit troisième écran plat de visualisation soit mobile en translation dans la même direction prédéterminée dans ledit troisième plan prédéterminé sur une troisième longueur prédéterminée.

Avantageusement, il existe au moins une position du second écran plat de visualisation où ce second écran plat est masqué par le premier écran plat de visualisation. De la même façon, il existe au moins une position du troisième écran plat de visualisation où ce troisième écran plat est masqué par le premier écran plat de visualisation.

Avantageusement, le système de visualisation comporte au moins un écran plat de visualisation fixe disposé au centre du système de visualisation.

Avantageusement, le système comporte des moyens électroniques agencés de façon à afficher sur le ou les écrans plats de visualisation une symbologie prédéterminée au moins fonction de la position de chaque écran.

Avantageusement, les moyens mécaniques sont des glissières sur lesquelles coulisse au moins un des écrans de visualisation.

L'invention sera mieux comprise et d'autres avantages apparaîtront à la lecture de la description qui va suivre donnée à titre non limitatif et grâce aux figures annexées parmi lesquelles :

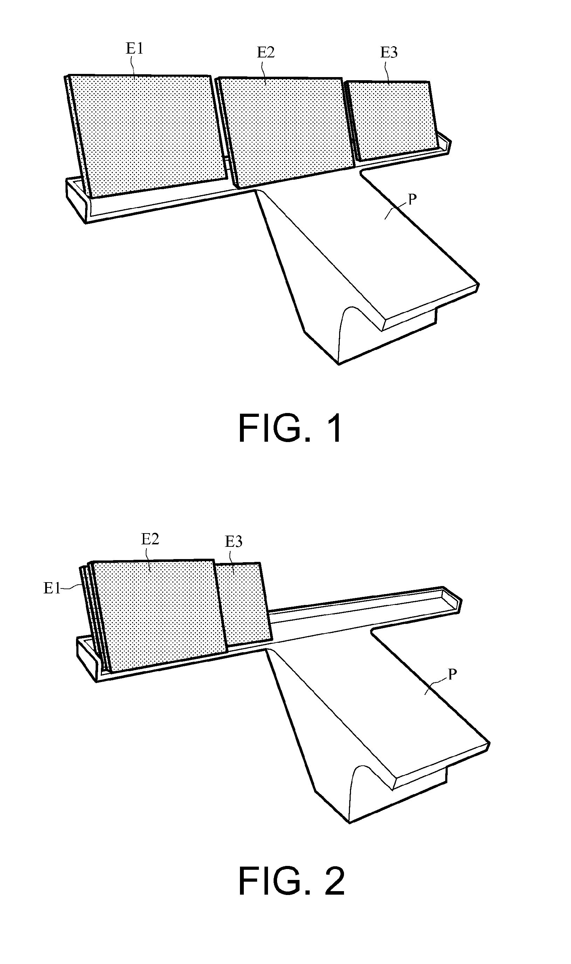

Les figures 1 à 3 représentent une vue en perspective d'un cockpit comportant un système de visualisation selon l'invention dans trois configurations différentes, la première configuration dite « IFR », la seconde configuration dite « VFR normal », la troisième configuration dite « VFR dégradée ».

A titre d'exemple non limitatif, les figures 1 à 3 représentent une vue en perspective d'un cockpit comportant un système de visualisation selon l'invention. Ce cockpit est destiné à être piloté par un équipage de deux personnes placées côte à côte de part et d'autre d'un piédestal central P. Un des membres d'équipage assure le pilotage et le second membre assure la gestion de la mission.

Dans cet exemple, l'ensemble de visualisation comporte trois écrans de visualisation E1, E2 et E3. Bien entendu, l'invention peut également s'appliquer à des ensembles de visualisation ne comportant qu'un ou deux écrans de visualisation ou plus de trois écrans de visualisation, certains fixes, d'autres mobiles.

Ces écrans de visualisation sont des écrans plats d'épaisseur faible n'excédant pas quelques centimètres. Ces écrans plats sont, par exemple, des écrans à cristaux liquides connus également sous l'acronyme « LCD » signifiant « Liquid Crystal Display ». Ils sont de dimension sensiblement identique. Ces écrans ont des largeurs et des hauteurs de quelques dizaines de centimètres.

Le système de visualisation comporte trois écrans mobiles montés sur des glissières mécaniques parallèles fixes qui assurent à la fois leur translation, leur guidage et leur maintien dans une position prédéterminée. Ces glissières sont conçues pour entraîner un masque visuel le plus faible possible vu des membres de l'équipage. Il est possible de remplacer les glissières par tout autre système mécanique assurant les mêmes fonctions. Il est à noter que l'écran de visualisation central peut être fixe. Dans ces conditions, les écrans mobiles périphériques peuvent se déplacer sur des glissières télescopiques masquées par l'écran central.

Le déplacement des écrans peut être assuré manuellement par les utilisateurs ou être commandé automatiquement par des moyens motorisés sur ordre des utilisateurs ou en fonction d'un programme préétabli dépendant de la phase de vol ou des conditions de pilotage ou de navigation.

Chacun des trois écrans mobiles a plusieurs positions opérationnelles selon le type de vol. Les figures 1 à 3 décrivent trois configurations possibles mais d'autres configurations sont envisageables en fonction des missions et des conditions de vol de l'hélicoptère. Il est à noter que, sur ces figures, seule la position des écrans est représentée, les symbologies affichées ne sont pas représentées. Il est à noter également que les symbologies affichées peuvent dépendre automatiquement de la position de l'écran.

Lorsque les trois écrans mobiles sont complètement déployés comme indiqué sur la figure 1, l'équipage retrouve ainsi une configuration « classique » à trois écrans disposés en ligne. Cette configuration est celle usuellement utilisée pour les vols aux instruments dit « IFR ». Dans cette configuration, les deux écrans mobiles périphériques E1 et E3 affichent alors la même symbologie qui peut comporter une représentation synthétique du paysage extérieur et une symbologie spécifique de pilotage et de navigation, l'écran central E2 affichant alors une représentation cartographique du terrain survolé et des informations concernant le plan de vol en cours.

La seconde configuration dite VFR est représentée en figure 2. Le premier écran mobile E2 est disposé devant le membre d'équipage assurant la mission. Le second écran E3 est en partie ou en totalité visible. Le troisième écran E1 est totalement masqué par les deux premiers écrans. Le pilote a ainsi un champ visuel sur l'extérieur complètement dégagé, lui assurant des conditions optimales de pilotage pour le vol à vue. Le premier écran et le second écran affichent alors les informations essentielles pour la navigation ou l'accomplissement de la mission.

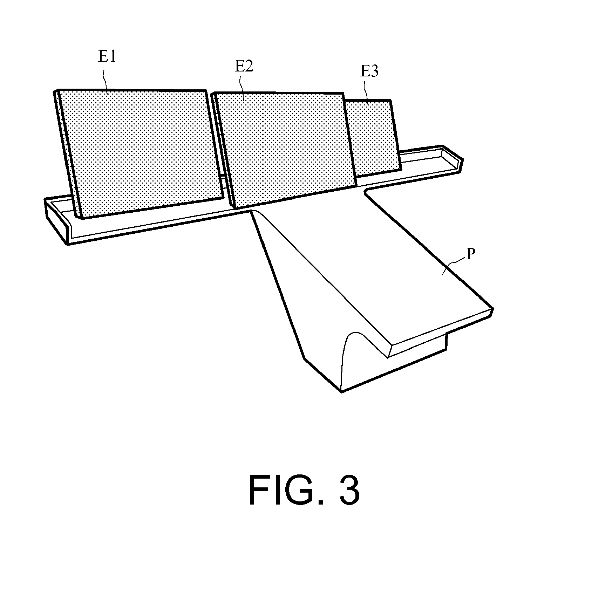

La troisième configuration dite VFR dégradée est représentée en figure 3. Le premier écran mobile E1 est disposé devant le membre d'équipage assurant la mission. Le second écran E2 est disposé en partie centrale au dessus du piédestal. Le troisième écran E3 est en partie déployé devant le pilote. Le pilote conserve ainsi un bon champ visuel sur l'extérieur tout en conservant des informations de pilotage. Le premier écran E1 affiche un état général des systèmes internes de l'hélicoptère et en particulier les systèmes en panne ou en dysfonctionnement. Le second écran E2 affiche les informations de navigation. Le troisième écran E3 enfin affiche des informations de pilotage.

Les avantages du système de visualisation selon l'invention sont essentiellement sa simplicité de mise en oeuvre et ses grandes capacités d'adaptation et d'optimisation en fonction de la mission, des conditions de vol et de l'état de l'appareil.

## Revendications

1. Système de visualisation de cockpit d'hélicoptère comportant au moins un premier écran (E1, E2, E3) plat de visualisation situé dans un premier plan prédéterminé, **caractérisé en ce que** le système de visualisation comporte des moyens mécaniques agencés de façon que ledit premier écran plat de visualisation soit mobile en translation dans une direction prédéterminée dans ledit premier plan prédéterminé sur une première longueur prédéterminée, le déplacement dudit premier écran plat est assuré manuellement ou automatiquement par des moyens motorisés en fonction d'un programme préétabli dépendant de la phase de vol ou des conditions de pilotage ou de navigation de l'hélicoptère.

2. Système de visualisation selon la revendication 1, **caractérisé en ce que** le système de visualisation comporte un second écran plat de visualisation situé dans un second plan prédéterminé parallèle au premier plan prédéterminé et **en ce que** les moyens mécaniques sont agencés de façon que ledit second écran plat de visualisation soit mobile en translation dans la même direction prédéterminée dans ledit second plan prédéterminé sur une seconde longueur prédéterminée, le déplacement dudit second écran plat est assuré manuellement ou automatiquement par des moyens motorisés en fonction d'un programme préétabli dépendant de la phase de vol ou des conditions de pilotage ou de navigation de l'hélicoptère.

3. Système de visualisation selon la revendication 2, **caractérisé en ce que** le système de visualisation comporte un troisième écran plat de visualisation situé dans un troisième plan prédéterminé parallèle au premier plan prédéterminé et **en ce que** les moyens mécaniques sont agencés de façon que ledit troisième écran plat de visualisation soit mobile en translation dans la même direction prédéterminée dans ledit troisième plan prédéterminé sur une troisième longueur prédéterminée, le déplacement dudit troisième écran plat est assuré manuellement ou automatiquement par des moyens motorisés en fonction d'un programme préétabli dépendant de la phase de vol ou des conditions de pilotage ou de navigation de l'hélicoptère.

4. Système de visualisation selon la revendication 2, **caractérisé en ce qu'il** existe au moins une position du second écran plat de visualisation où ce second écran plat est masqué par le premier écran plat de visualisation.

5. Système de visualisation selon l'une des revendications précédentes, **caractérisé en ce qu'il** existe au moins une position du troisième écran plat de visualisation où ce troisième écran plat est masqué par le premier écran plat de visualisation.

6. Système de visualisation selon l'une des revendications précédentes, **caractérisé en ce que** le système de visualisation comporte au moins un écran plat de visualisation fixe disposé au centre du système de visualisation.

7. Système de visualisation selon l'une des revendications précédentes, **caractérisé en ce que** le système comporte des moyens électroniques agencés de façon à afficher sur le ou les écrans plats de visualisation une symbologie prédéterminée au moins fonction de la position de chaque écran.

8. Système de visualisation selon l'une des revendications précédentes, **caractérisé en ce que** les moyens mécaniques sont des glissières sur lesquelles coulisse au moins un des écrans de visualisation.

9. Procédé de configuration d'un système de visualisation selon l'une des revendications 3 à 8, ledit système de visualisation étant embarqué sur un hélicoptère comportant deux membres d'équipage, caractérisé en ce :
lorsque l'hélicoptère effectue un vol aux instruments dit « IFR », les trois écrans plats de visualisation sont complètement déployés ;
lorsque l'hélicoptère effectue un vol à vue dit « VFR », le premier écran de visualisation mobile est disposé devant un premier membre d'équipage assurant la mission, le second écran de visualisation est en partie ou en totalité visible, le troisième écran de visualisation est totalement masqué par les deux premiers écrans de visualisation ;
lorsque l'hélicoptère effectue un vol à vue dit « VFR » dégradé, le premier écran de visualisation mobile est disposé devant un premier membre d'équipage assurant la mission, le second écran de visualisation est disposé au centre des trois écrans de visualisation, le troisième écran de visualisation est en partie déployé devant un second membre d'équipage assurant le pilotage.
